# EUROPEAN PATENT APPLICATION

(11) **EP 1 958 739 A1**
(43) Date of publication of application: **20.08.2008**
(21) Application number: 08250462.2
(22) Date of filing: 07.02.2008
(51) Int. Cl.: B26D 1/143, B26D 7/01, B26D 7/04, B26D 7/06

(54) **Location of food products in food slicing machines**

(30) Priority: 15.02.2007 GB 0702951
(71) Applicant: AEW Delford Systems Limited, Norwich NR7 9BB (GB)
(72) Inventor: Culling, Alan, Norwich Norfolk NR12 8AY (GB)
(74) Representative: Sharrock, Daniel John

(57) **Abstract**

A food slicing machine is provided which includes restraining apparatus operative to engage the sides of a food product (4) to be sliced to produce lateral location of the food product. The restraining apparatus comprises a moveable member (8) operative to push a food product to be sliced against a guide (10). The machine is arranged to cause gripping apparatus (5) to engage one end of the food product when the food product is pressed by the moveable member against the guide, after which the moveable member moves away from the food product and thereby releases the lateral pressure on the food product prior to slicing thereof.

## Description

### Field of the Invention

This invention relates to the location of food products (such as bacon, cheese or cooked meat) in slicing machines.

### Background to the Invention

A known food slicing machine has a slicing blade for slicing food products and a bed for supporting the products during slicing. The machine includes gripper apparatus for gripping one end of a food product to be sliced and for urging the food product towards the slicing blade for slicing of the other end of the food product. In the case of a food product with irregularly shaped ends, the product tends to move laterally when the product is urged or pressed towards the slicing blade, which causes problems when the product is sliced.

### Summary of the Invention

According to one aspect of the invention there is provided a food slicing machine having a slicing blade for slicing food products, a bed for supporting the products during slicing, advancing apparatus for engaging one end of a food product to be sliced and urging the food product towards the blade for slicing of the other end of the food product and restraining apparatus operative to engage the sides of a food product, within a range of widths, to provide lateral or width-wise location for the product when the advancing apparatus pushes the product towards the blade. For any food product within the range of widths, the lateral location provided by the restraining apparatus minimises or prevents any tendency for the food product to move sideways when the food product is urged towards the slicing blade.

The restraining apparatus may comprise a moveable member linked to a pneumatic actuator for moving the moveable member, the moveable member being operative to push a food product to be sliced from a waiting position on one side of the bed to a slicing position on the bed and subsequently to apply pressure to one side of the product to provide the lateral location.

The restraining apparatus may also comprise a guide which extends along the other side of the bed and against which the food product is pressed by the moveable member to provide the lateral location.

The restraining apparatus may include a pressure sensor which is operative to detect the compressive force to which the food product is subjected when the food product is pressed by the moveable member against the guide, and the pressure sensor may be mounted in or on the guide.

In the preferred embodiment to be described, detection of an adjustable predetermined pressure by the sensor causes the advancing apparatus to engage and grip said one end of the food product, after which the moveable member moves away from the food product and thereby releases lateral pressure on the food product.

The advancing apparatus is preferably constituted by gripper apparatus which not only engages, but also grips, said one end of the food product.

According to another aspect of the invention there is a provided a method of loading a food product to be sliced into a slicing machine having a slicing blade, the method comprising applying a compressive force to the sides of a product in order to provide lateral location for the product prior to slicing and engaging one end of the laterally located product and urging it towards the slicing blade for slicing of the other end of the product.

In the preferred method the compressive force is applied by a moveable arm which moves the product onto a bed of the machine prior to gripping of said one end of the product.

The product may be laterally located on the bed of the machine between the moveable member and a guide extending beside the bed and the guide may have a pressure sensor, with the achievement of an adjustable predetermined pressure by the sensor causing said one end of the food product to be engaged (and preferably also gripped), after which the arm moves away from the product to release the compressive force.

### Brief Description of the Drawings

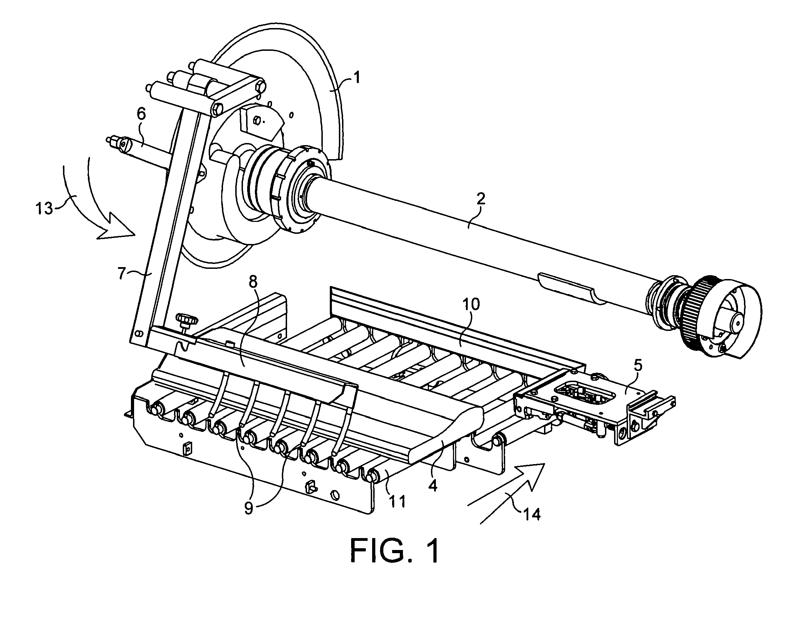

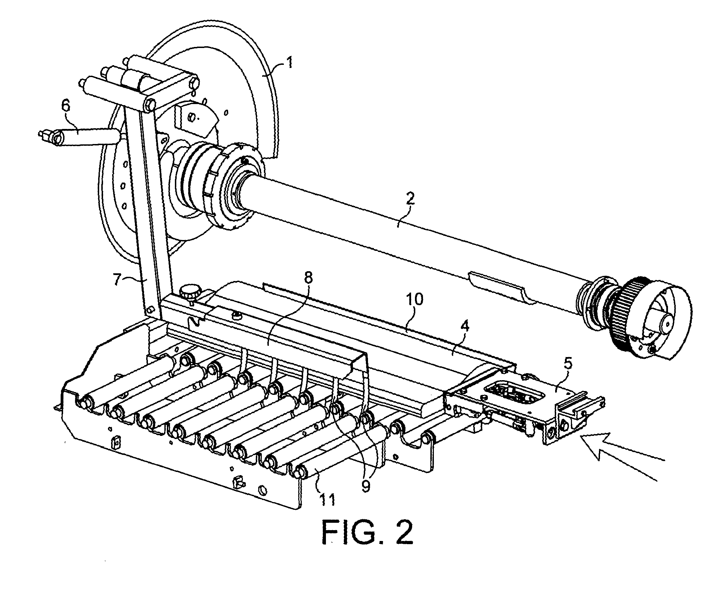

Food slicing apparatus according to the invention will now be described, by way of example, with reference to the accompanying drawings, in which Figures 1 and 2 are isometric views showing restraining means of the machine in retracted and extended positions respectively.

### Detailed Description of the Drawings

The slicing machine has a rotatable slicing blade 1 driven by a drive shaft 2. Below the shaft 2 is a bed 3 (formed by a plurality of spaced rollers), to support a food product 4 to be sliced, in this case a log of bacon. In Figure 1 the log of bacon 4 is in a waiting position on one side of the bed 3. Gripper apparatus 5 is disposed at the end of the bed 3 remote from the blade 1, the gripper apparatus 5 having extendable and retractable hooks which are capable of penetrating and gripping the trailing end of the bacon log 4 and urging the latter towards the blade 1 for slicing of the leading end of the bacon log into slices which are then conveyed away from the region of the blade for packaging.

The slicing machine has restraining apparatus for engaging the sides of the bacon log 4 to provide lateral location for the latter when the gripper apparatus 5 pushes the bacon log 4 towards the blade 1. The restraining apparatus comprises a pneumatically operated piston and cylinder device 6 which moves an arm 7 one end of which is pivotally mounted in the machine. The other end of the arm carries a horizontally projecting arm 8 carrying a plurality of downwardly extending curved fingers 9. In the retracted position of the restraining apparatus shown in Figure 1, the arm 8 and fingers 9 are positioned on one side of the bed 3. A guide 10 extends horizontally along the other side of the bed 3.

A bacon log 4 to be sliced is first placed in the machine on rollers 11 defining the waiting position, illustrated in Figure 1. The piston and cylinder device 6 is then actuated to cause the arm 8 and the projecting fingers 9 to undertake a horizontal movement towards the guide 10 on the other side of the bed 3. The fingers 9 engage the adjacent edge of the bacon log 4 and move it horizontally onto the bed 3, until the other edge of the bacon log engages the guide 10 (Figure 2).

The guide 10 is equipped with a pressure sensor which is set up so that detection by the sensor of a predetermined pressure causes the gripper apparatus 5 to engage and grip the end of the product and to push the product towards the slicing blade 1. After the detection of this predetermined pressure, the piston and cylinder device 6 is actuated to cause the restraining means to move away from the product, back to its retracted position of Figure 1, thereby releasing the lateral pressure on the food product 4. Thus, the arm 8 and the fingers 9 act not only to move the bacon log from its waiting position onto the bed 3, but also to provide lateral location for the bacon log at the time when the compressive force is applied to the bacon log by the gripper apparatus 5. The lateral location of the bacon log 4 between the guide 10 and the fingers 9, under a predetermined pressure, prevents any tendency for the bacon log 4 to move sideways. Moreover, the amplitude of movement of the arm 8 and fingers 9 is sufficient to cater for different widths of food products. The predetermined pressure to which the pressure sensor on the guide is set is adjustable to suit different sizes and characteristics of food products.

## Claims

1. A food slicing machine having a slicing blade for slicing food products, a bed for supporting a food product during slicing, gripping apparatus for engaging and gripping one end of the food product to be sliced and urging the food product towards the blade for slicing of the other end of the food product, and restraining apparatus operative to engage the sides of a food product, within a range of widths, to produce lateral location of the food product, wherein the restraining apparatus comprises a moveable member operative to push a food product to be sliced against a guide which extends along the other side of the bed to provide said lateral location, and wherein the machine is operative to cause the gripping apparatus to engage said one end of the food product when the food product is pressed by the moveable member against the guide, after which the moveable member moves away from the food product and thereby releases the lateral pressure on the food product prior to slicing thereof.

2. A food slicing machine according to claim 1, wherein the restraining apparatus includes a pressure sensor which is operative to detect the compressive force to which the food product is subjected when the food product is pressed by the moveable member against the guide.

3. A food slicing machine according to claim 2, wherein the pressure sensor is mounted in or on the guide.

4. A food slicing machine according to claim 2 or 3, wherein detection of an adjustable predetermined pressure by the sensor causes the advancing apparatus to engage said one end of the food product.

5. A food slicing machine according to any of claims 2 to 4, wherein the moveable member comprises a horizontally moveable arm carrying a plurality of projecting fingers which engage the food product to move it and to apply pressure thereto.

6. A method of loading a food product to be sliced into a slicing machine having a slicing blade, the method comprising the steps of:
- applying a compressive force to the sides of a food product in order to provide lateral location for the food product prior to slicing, wherein the compressive force is applied by a moveable arm pushing the food product against a guide in the machine;
- engaging and gripping one end of the laterally-located food product and urging it towards the slicing blade for slicing of the other end of the food product; and
- moving the arm away from the product to release the compressive force prior to slicing thereof.

7. A method according to claim 6, wherein the guide has a pressure sensor and the achievement of an adjustable predetermined pressure by the sensor causes said one end of the product to be engaged.

8. A food slicing machine having a slicing blade for slicing food products, a bed for supporting a food product during slicing, advancing apparatus for engaging one end of the food product to be sliced and urging the food product towards the blade for slicing of the other end of the food product, and restraining apparatus operative to engage the sides of a food product, within a range of widths, to produce lateral or width-wise location for the food product when the advancing apparatus pushes the food product towards the blade.

9. A method of loading a food product to be sliced into a slicing machine having a slicing blade, the method comprising applying a compressive force to the sides of a food product in order to provide lateral location for the food product prior to slicing and engaging one end of the laterally-located food product and urging it towards the slicing blade of the other end of the food product.
